# EUROPEAN PATENT APPLICATION

(11) **EP 1 207 008 A1**
(43) Date of publication of application: **22.05.2002**
(21) Application number: 01127027.9
(22) Date of filing: 14.11.2001
(51) Int. Cl.: B23Q 11/12

(54) **Cooler for machine tool**

(30) Priority: 14.11.2000 JP 2000346822
(71) Applicant: ECOREG LTD., Osaka-shi, Osaka 531-0072 (JP)
(72) Inventor: Hara, Mitsugu, Kishiwada-shi, Osaka 595-0827 (JP)
(74) Representative: Frankland, Nigel Howard

(57) **Abstract**

A less expensive cooler for a machine tool comprising cooling mist generator (12) for generating a cooling mist, and a supply unit for supplying the cooling mist to a heat generating component (3,4) of the machine tool which is liable to be heated due to frictional heat, so as to thereby cool the heat generating component.

## Description

### BACKGROUND OF THE INVENTION

### Field of the Invention

The present invention relates to a cooler for a machine tool.

### Description of the Art

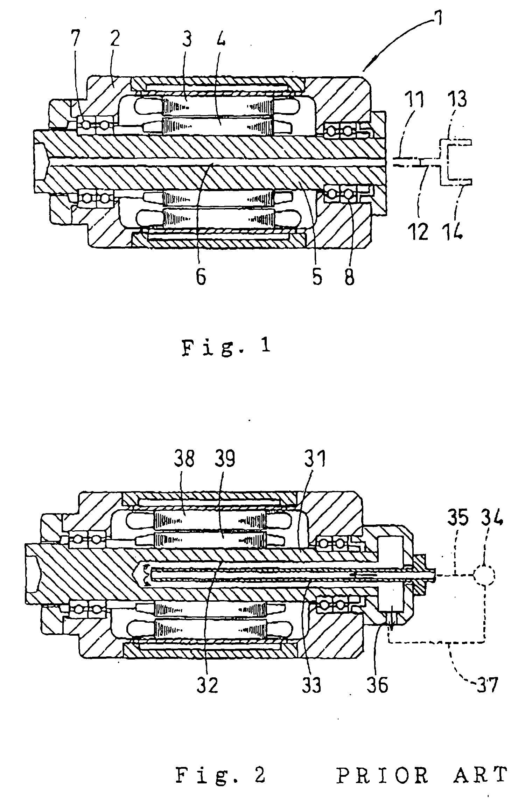

Machine tools generally include heat generating components such as a motor and a linear guide driver mechanism which are liable to be heated due to frictional heat. Therefore, cooling means is conventionally provided for cooling the heat generating components. As motor cooling means, for example, a motor with a built-in spindle as shown in Fig. 2 is proposed in Japanese Unexamined Patent Publication No. 9-150346 (1997). The spindle 31 has a hollow portion 32 axially extending therethrough, and a cooling liquid guide 33 is provided in the hollow portion 32. A cooling liquid is supplied to one end of the cooling liquid guide 33 from a cooling liquid supply source 34 via a supply pipe 35, and passed through the cooling liquid guide 33. Then, the cooling liquid is introduced from the other end of the cooling liquid guide 33 into the hollow portion 32 and, after being passed through the hollow portion 32, returned into the cooling liquid supply source 34 from an outlet port 36 via a return pipe 37. In Fig. 2, reference numerals 38 and 39 denote a stator and a rotor, respectively.

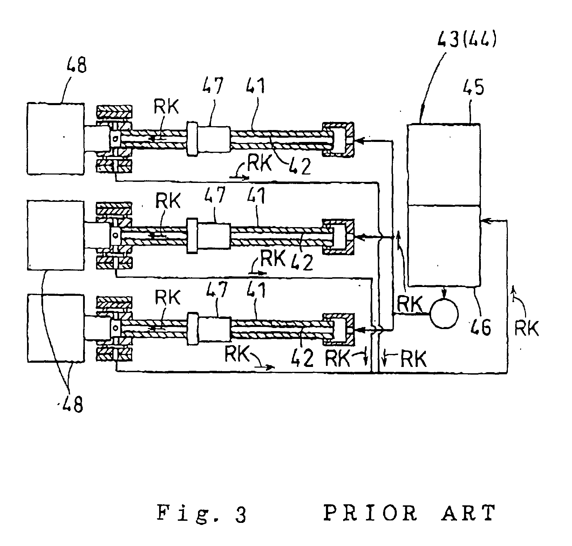

As cooling means for a linear guide driver mechanism, a ball-thread device as shown in Fig. 3 is proposed in Japanese Unexamined Patent Publication No. 10-43991 (1998). In the ball-thread device, a plurality of threaded shafts 41 (three threaded shafts in Fig. 3) are provided, each having a cooling liquid communication channel 42 axially extending therethrough. A cooling liquid (RK) is supplied into one end of each of the cooling liquid communication channels 42 from a cooling liquid supply unit 43. After being passed through the cooling liquid communication channels 42, the cooling liquid is returned into a cooling liquid recovery unit 44 (which includes a cooling liquid tank 45 and a chiller unit 46 shared with the cooling liquid supply unit 43) from the other end of the cooling liquid communication channels 42. In Fig. 3, reference numerals 47 and 48 denote ball nuts and servo motor units, respectively.

However, the cooling liquid supply source 34, the cooling liquid supply unit 43 and the cooling liquid recovery unit 44, specifically designed for the motor with the built-in spindle and the ball-thread device for supplying the cooling liquid, are expensive, making the machine tool per se more expensive.

In view of the foregoing, it is an object of the present invention to provide a less expensive cooler for a machine tool.

### SUMMARY OF THE INVENTION

In accordance with the present invention and to achieve the aforesaid object, there is provided a cooler for a machine tool, which comprises cooling mist generating means for generating a cooling mist, and supply means for supplying the cooling mist to a heat generating component of the machine tool which is liable to be heated due to frictional heat, the mist cooling the heat generating component.

In the inventive machine tool cooler, the cooling mist generating means is provided for generating the cooling mist, and the supply means is provided for supplying the cooling mist to the heat generating component of the machine tool which is liable to be heated due to frictional heat, so that the cooling mist can cool the heat generating component. More specifically, the heat generating component is cooled by supplying the cooling mist to the heat generating component to thereby take the heat away from the heat generating component by evaporation of the cooling mist.

In addition, the cooling mist generating means and the supply means easily can be provided by employing a cooling liquid supply unit and a compressed air supply unit provided in the machine tool. More specifically, a tank containing a cooling liquid, a lubricating liquid, or a mixture of a cooling liquid and a lubricating liquid, for cooling and/or lubricating a tool, and a pump for supplying the cooling liquid or the like from the tank to a cooling liquid injection nozzle may be provided as the cooling liquid supply unit. An air compressor for supplying compressed air to eject the cooling liquid or the like from the cooling liquid injection nozzle may be provided as the compressed air supply unit in the machine tool. Therefore, the generation of the cooling mist easily can be achieved with the use of the cooling liquid supply unit and the compressed air supply unit, i.e., by supplying the cooling liquid and the compressed air from the cooling liquid supply unit and from the compressed air supply unit, respectively, and mixing the cooling liquid with the compressed air so as to make the cooling liquid into a mist form. By thus employing the cooling liquid supply unit and the compressed air supply unit already provided in the machine tool, the need for providing a relatively expensive cooling liquid supply unit specifically designed for the cooling of the heat generating component can be obviated and significant cost reductions of the machine tool can be realized.

In the present invention, examples of the heat generating component which is liable to be heated due to frictional heat include a motor, a saddle, a linear guide driver mechanism, a rotational guide driver mechanism, and a tool post indexing mechanism.

Where the heat generating component is a motor for use with the inventive machine tool cooler, the stator and th rotor of the motor can be cooled with the cooling mist. Where the heat generating component is a linear guide driver mechanism for use with the inventive machine tool cooler, a ball thread (threaded shaft) and the like of the linear guide driver mechanism can be cooled with the cooling mist.

### BRIEF DESCRIPTION OF THE DRAWINGS

Fig. 1 is a sectional view illustrating a machine tool cooler according to one embodiment of the present invention;
Fig. 2 is a sectional view illustrating the prior art; and
Fig. 3 is an explanatory diagram illustrating the prior art.

### DETAILED DESCRIPTION OF THE PREFERRED EMBODIMENT

One embodiment of the present invention will hereinafter be described in detail with reference to the attached drawings.

Fig. 1 illustrates a cooler for a machine tool in accordance with one embodiment of the present invention. In this embodiment, a numerically controlled (NC) lathe is employed as the machine tool. In Fig. 1, a motor 1 of a built-in spindle type is provided in the machine tool and includes a housing 2, a stator 3, a rotor 4, and a spindle 5. The spindle 5 has a through-hole (supply means) 6 axially extending therethrough. One end of the through-hole 6 is connected to a first bifurcated connection tube (cooling mist generating means) 11 to be described later, and the other end is open to the atmosphere. In Fig. 1, reference numerals 7, 8 denote bearings.

The machine tool has a cooling liquid supply unit (not shown) including a tank containing cooling water (cooling liquid) such as tap water and a pump for supplying the cooling water from the tank to a cooling water injection nozzle (not shown) , and a compressed air supply unit (not shown) including an air compressor for supplying compressed air to the cooling water injection nozzle. During machining with the machine tool, the cooling water and the compressed air are supplied from the cooling liquid supply unit and the compressed air supply unit, respectively, to the cooling water injection nozzle, so that the cooling water is sprayed over a machining part (including a machining surface of a tool and a machined surface of a workplace) from the cooling water injection nozzle.

First bifurcated connection tube 11 as shown in Fig. 1 has a confluent portion 12 connected to the one end of the through-hole 6, and two branch portions 13, 14 branched from the confluent portion 12. One of the branch portions 13 is connected to the cooling liquid supply unit via a hose or the like (not shown), and the other branch portion 14 is connected to the compressed air supply unit via a hose or the like (not shown).

A ball thread (not shown) also provided in the machine tool has a through-hole (supply means) axially extending therethrough. one end of the through-hole of the ball thread is connected to a second bifurcated connection tube (cooling mist generating means, not shown) having substantially the same construction as the first bifurcated connection tube 11, and the other end of the through-hole is open to the atmosphere.

When the cooling liquid supply unit and the compressed air supply unit are driven during the machining of the workpiece, the cooling water is supplied from the cooling liquid supply unit to the cooling water injection nozzle and to the one branch portion 13 of the first bifurcated connection tube 11. At the same time, the compressed air is supplied from the compressed air supply unit to the cooling water injection nozzle and to the other branch portion 14 of the first bifurcated connection tube 11.

As a result of the above, the cooling water is sprayed over the machining part from the cooling water injection nozzle. In addition, the cooling water and the compressed air respectively supplied to the branch portions 13 and 14 merge and mix with each other in the confluent portion 12, so that the cooling water is disintegrated into minute water particles in the form of a mist. The resultant cooling mist flows into the through-hole 6 provided in the spindle 5. The mist evaporates to cool the spindle 5 while passing through the through-hole 6, and is discharged from the other end of the through-hole 6 into the atmosphere. Similarly, the cooling mist is passed through the through-hole provided in the ball thread, and evaporates so as to cool the ball thread.

In this embodiment, the spindle 5 and the ball thread can be cooled by passing the cooling mist through the through-holes 6 respectively provided in the spindle 5 and the ball thread so as to thereby take heat away from the spindle 5 and the ball thread by the evaporation of the cooling mist. In addition, the cooling mist can be generated by employing the cooling liquid supply unit and the compressed air supply unit already provided in the machine tool, so that the cooler is less costly without the need for providing a cooling mist supply unit specifically designed for the cooling of the spindle and the ball thread. Further, tap water may be used as the cooling water and, hence, does not adversely influence the environment even if the cooling mist as passed through the through-holes 6 is discharged from the other ends of the through-holes 6 into the atmosphere. The through-holes 6 each have a simple construction with the ends thereof being open to the atmosphere.

In the embodiment described above, any of various cooling liquids and lubricating liquids may be used alone or as a mixture instead of water. Further, the machine tool cooler according to the aforesaid embodiment may be adapted to cool the stator 3.

The inventive machine tool cooler is applicable, not only to a numerically controlled (NC) lathe, but also to any of various other machine tools including machining centers and grinding machines.

In the inventive machine tool cooler, the cooling mist generating means is provided for generating the cooling mist, and the supply means is provided for supplying the cooling mist to the heat generating component of the machine tool which is liable to be heated due to frictional heat, so that the mist can cool the heat generating component. Therefore, the heat generating component can be cooled by supplying the cooling mist to the heat generating component so as to take heat away from the heat generating component by the evaporation of the cooling mist. In addition, the cooling mist generating means and the supply means easily can be provided by employing the cooling liquid supply unit and the compressed air supply unit already provided in the machine tool. More specifically, a tank containing a cooling liquid, a lubricating liquid or a mixture of the cooling liquid and the lubricating liquid, for cooling or lubricating a tool, and a pump for supplying the cooling liquid or the like from the tank to a cooling liquid injection nozzle typically are provided as a cooling liquid supply unit in a machine tool. In addition, an air compressor for supplying compressed air to eject the cooling liquid or the like from the cooling liquid injection nozzle typically is provided as a compressed air supply unit in the machine tool. Therefore, the generation of the cooling mist easily can be achieved with the use of the cooling liquid supply unit and the compressed air supply unit, i.e., by supplying the cooling liquid and the compressed air from the cooling liquid supply unit and from the compressed air supply unit, respectively, and mixing the cooling liquid with the compressed air to form the cooling liquid into a mist form. By thus employing the cooling liquid supply unit and the compressed air supply unit provided in the machine tool, the need for providing a relatively expensive cooling liquid supply unit specifically designed for the cooling of the heat generating component can be obviated and significant cost reductions for the machine tool are realized.

Where the heat generating component is a motor used with the inventive machine tool cooler, the stator and the rotor of the motor can be cooled with the cooling mist. Where the heat generating component is the linear guide driver mechanism used with the inventive machine tool cooler, the ball thread and the like of the linear guide driver mechanism can be cooled with the cooling mist.

In the present Specification "comprise" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A cooler for a machine tool, comprising:
cooling mist generating means for generating a cooling mist; and
supply means for supplying the cooling mist to a heat generating component of the machine tool which is liable to be heated due to frictional heat, and thereby to cool the heat generating component,

2. A cooler as set forth in claim 1, wherein the heat generating component is a motor.

3. A cooler as set forth in claim 1, wherein the heat generating component is a linear guide driver mechanism.
